Europäisches Patentamt

European Patent Office

Office européen des brevets

(11) Publication number: **0 161 094**
**B1**

(12) EUROPEAN PATENT SPECIFICATION

(45) Date of publication of patent specification: 02.08.89

(51) Int. Cl.⁴: **B 22 F 1/00,** C 09 J 3/14, C 08 L 33/08

(21) Application number: 85302999.9

(22) Date of filing: 26.04.85

(54) Method of joining metallic materials by sintering.

(30) Priority: 28.04.84 JP 86918/84

(43) Date of publication of application:
13.11.85 Bulletin 85/46

(45) Publication of the grant of the patent:
02.08.89 Bulletin 89/31

(84) Designated Contracting States:
DE FR GB

(56) References cited:
GB-A-1 548 226

(73) Proprietor: **NITTO DENKO CORPORATION**
**1-2, Shimohozumi 1-chome Ibaraki-shi**
**Osaka (JP)**

(73) Proprietor: **Mazda Motor Corporation**
**No. 3-1, Shinchi Fuchu-cho**
**Aki-gun Hiroshima-ken (JP)**

(72) Inventor: **Sakuramoto, Takafumi c/o Nitto**
**Electric**
**Industrial Co Ltd 1-2 Shimohozumi 1-chome**
**Ibaraki-shi Osaka (JP)**
Inventor: **Shimizu, Yukio c/o Nitto Electric**
**Industrial Co Ltd 1-2 Shimohozumi 1-chome**
**Ibaraki-shi Osaka (JP)**
Inventor: **Asoshina, Eishi c/o Nitto Electric**
**Industrial Co Ltd 1-2 Shimohozumi 1-chome**
**Ibaraki-shi Osaka (JP)**
Inventor: **Tominaga, Takashi c/o Nitto Electric**
**Industrial Co Ltd 1-2 Shimohozumi 1-chome**
**Ibaraki-shi Osaka (JP)**
Inventor: **Morishita, Tsuyoshi c/o Mazda Motor**
**Corporation**
**3-1, Shinchi Fuchu-cho**
**Aki-gun Hiroshima (JP)**
Inventor: **Sakai, Noriyuki c/o Mazda Motor**
**Corporation**
**3-1, Shinchi Fuchu-cho**
**Aki-gun Hiroshima (JP)**

Courier Press, Leamington Spa, England.

**EP 0 161 094 B1**

(72) Inventor: **Osaki, Sigemi c/o Mazda Motor Corporation**
**3-1, Shinchi Fuchu-cho**
**Aki-gun Hiroshima (JP)**

(74) Representative: **Diamond, Bryan Clive et al**
**Gee & Co. Chancery House Chancery Lane**
**London WC2A 1QU (GB)**

## Description

This invention relates to a method for use in adhering onto a metal substrate, a metallic sheet or sheet-like material composed of a powdered fusible metal alloy held together by a synthetic resin binder.

For the purpose of providing an alloy layer on a metal substrate, the alloy, in the form of such a sheet of particles of alloy adhered together with binder, is placed on the substrate and the assembly is heated to a temperature at which the alloy melts or sinters onto the substrate surface. To hold such a sheet onto a substrate which is other than flat and horizontal it is necessary to fix the sheet to the substrate; but any adhesive force of the binder cannot support the weight of the metal powder sheet, whereby the metal powder sheet peels off or falls from the substrate; in particular, this tends to occur when sintering is performed on the metal sheet which suffers vibration or impact during conveying in a furnace (such as a mesh-belt type or pusher type continuous sintering furnace or a vacuum sintering furnace).

As an effective method for overcoming the above-described problem, we have, in European Application No. 85301264.9 (and Japanese Patent Application No. 34887/84) claimed a composition for such use, comprising a specific alkyl acrylate or methacrylate copolymer preferably with an adhesion-providing resin, which contains at least 30% by weight of non-volatile materials after non-oxidizing heating at 300°C for 80 minutes; and a method of sintering to a metal substrate a sheet or molding of a metal alloy wherein a layer or film of the composition is interposed therebetween and (a) the assembly is heated to 150 to 400°C for at least 5 minutes in a non-oxidizing atmosphere so as to form from the composition an adhesive, and (b) continuing the heating until the metal alloy is sintered to the substrate and the adhesive disappears.

However, the need for the first heating step (a) to be within that specific temperature range (and preferably to 250° to 380°C) is inconvenient and tends to restrict the industrial application of this method. We have now devised a composition and method which overcomes this problem and which does not require the aforesaid copolymer.

According to the present invention, we provide a method of sintering a metal alloy to a metal substrate wherein the alloy is in the form of a molding or sheet formed from a mixture of the alloy and a synthetic resin binder, which comprises placing said sheet or molding on said substrate, interposing between said sheet and substrate a fixing composition containing as its principal component a thermo-setting resin, heating the resultant assembly in a non-oxidizing atmosphere so as to form from the composition an adhesive, continuing the heating at a constant rate of temperature increase up to the temperature at which the metal alloy is sintered to the substrate and at which the adhesive formed disappears, and the amount of residual carbon of the resin after completion of the sintering being at least 0.5% by weight.

When the above described composition is interposed between the metal powder molding and the metal substrate and the sintering treatment is performed at a definite rate of increase in temperature, the composition is first hardened in the initial temperature raising stage of usually from about 120 to 250°C to assist the adhesion and fixing of the molding onto the base material by the strong adhesive force and further causes a thermal decomposition polycondensation reaction in the subsequent temperature raising stage to form a carbon precursor, which exhibits the function of assisting the adhesion and fixing the molding onto the base material in the temperature range up to usually about 700°C at which the molding begins to sinter. Therefore, when the metal powder molding is placed on a slanting or curved surface of a metal substrate or is stuck to the underside thereof and the molding is then subjected to sintering requiring applying vibration or impact to the molding during conveying in a sintering furnace, the fixing composition prevents peeling off or falling of the metal powder molding during the sintering.

Thus, by interposing the fixing composition between the metal powder molding and the metal substrate, the desired metal coating strongly metal-to-metal bonded to the substrate can be formed without the specific sintering operation as we previously required, i.e. by applying the conventional sintering treatment employing a constant rate of temperature increase and without peeling off or falling off of the metal powder molding during the sintering treatment.

The most preferred thermosetting resin which can be used in this invention is an epoxy resin. Examples of the epoxy resin are a bisphenol A type of epoxy resin having an epoxy equivalent of from about 100 to 5,000, an ether ester type epoxy resin, a novolak type epoxy resin, an ester type epoxy resin, an alicyclic type epoxy resin, a glycidyl ether type epoxy resin containing nitrogen, etc. Of those epoxy resins, a bisphenol A type epoxy resin is preferred.

As a hardening agent for an epoxy resin, a heat-activative hardening agent which produces a hardening action by heating is used. In general, a hardening agent which is active in the temperature range of from about 80 to 200°C is suitable. Examples of the hardening agent which can be used are dicyandiamide, imidazoles, hydrazide compounds, urea derivatives, etc. The amount of the hardening agent is usually from about 1 to 15 parts by weight per 100 parts by weight of the epoxy resin.

Other usable thermosetting resins are phenolic resins and unsaturated polyester resins (with appropriate hardening agents) and urethane resins (formed from a polyisocyanate and polyol) which may be modified, e.g. an acryl-modified polyisocyanate and/or an acryl-modified polyol.

The fixing composition may optionally also contain, if desired and necessary, a conventional hardening agent; a hardening accelerator; a xylene resin, paraffin wax, process oil or abietyl alcohol as a softening agent; calcium carbonate, silica or talc as a filler; dioctyl phthalate, dioctyl adipate, triphenyl phosphate or dibutyl phthalate as a plasticizer.

It is important that, after the fixing composition (interposed between a metal powder molding and a metal substrate) has been sintered, the amount of residual carbon is at least 0.5% by weight, so that the desired effect of this invention can be obtained; if the amount of residual carbon is less than 0.5% by weight, the improvement of the adhesive and fixing force of the metal powder molding on heating at high temperature cannot be obtained.

The establishment of the above-described amount of residual carbon can be easily made by appropriately selecting the type of the thermosetting resin or the types of the thermosetting resin and hardening agent, or by selecting the types and amounts of additives. It is particularly preferred that the amount of residual carbon is in the range of from 1.0 to 10% by weight.

It is desirable that the fixing composition is pressure-sensitively adhesive, but it is not essential; otherwise, by applying heat energy to the composition interposed between the metal powder molding and the metal substrate, temporary adhesion of the composition can be easily effected.

Now, the method of using the fixing composition is explained. Firstly, between the metal substrate and a metal powder molding there is interposed the composition of the invention, by previously forming a sheet of the composition or by coating at least one of the substrate and the molding with a layer of the composition.

The thickness of the sheet or layer of the composition is generally from about 5 to 50 μm, preferably about 10 to 30 μm. If the thickness is too thin, the desired effect is not obtained and if it is too thick, generation of gas at the interface between the base material and the molding becomes severe so as to reduce the fixing strength at sintering and the bonding strength after sintering.

The metal powder molding used can be formed by rolling a mixture of a metal powder and a synthetic resin-based binder into a sheet or similar article; a sheet thereof usually has thickness of from about 0.5 to 5 mm.

As the above-mentioned metal powder, various metal powders such as a self-melting alloy powder and an abrasion-resisting alloy powder can be used according to the property to be imparted to the surface of the metal base material. A representative example of the alloy powder is an Fe—M—C system eutectic alloy powder which is an abrasion-resisting alloy powder, wherein. M contains at least one of Mo, B and P as the main component. Furthermore, M may further contain Cr, V, W, Nb, Ta or Ti as a secondary element and may contain other elements such as Si, Ni, Mn, etc. Such a eutectic alloy powder has the feature that the sintering temperature is relatively low, the liquid phase becomes generally from about 10 to 50% by volume in the temperature range of from about 1,000 to 1,150°C, and the liquid phase has an excellent wetting property for the metal base material.

In addition, it is preferred that the particle size of the alloy powder be generally 0.104 mm or less (about 150 Tyler mesh or less) in view of the fact that the particle size influences the porosity after sintering. If the particle size is larger than the above value, it is difficult to form an alloy layer having a high density.

As the synthetic resin-based binder to be mixed with the above-described metal powder, a binder having a pressure-sensitive adhesive property is preferred. In particular, an acrylic polymer or copolymer composed of a (meth)acrylic alkyl ester or composed of the ester and a monomer copolymerizable therewith and an acrylic pressure-sensitive adhesive composition composed of the acrylic polymer or copolymer containing added thereto an adhesive property imparting resin such as an alkyl-phenolic resin, a rosin resin, a petroleum resin, a cumarone-indene resin, etc., are preferably used (e.g. as described in European Application No. 85301244.1).

The above-described synthetic resin-based binder is diluted with a suitable organic solvent such as acetone, toluene, methyl ethyl ketone, etc., the solution is kneaded with from about 10 to 100 parts by weight of the metal powder per 1 part by weight of the solid component thereof, the kneaded mixture is poured onto a mold having thereon a mold release paper and after evaporating the solvent, the mixture is molded into a sheet form or the like by passing it through molding rolls.

The metal powder molding is placed on a metal substrate with the fixing composition interposed therebetween as described above and is sintered in a non-oxidizing atmosphere. The temperature is then raised at a constant rate and it is unnecessary to maintain the system at a lower temperature for a definite period of time at sintering as in the previous EPA proposal. In the initial temperature raising stage, the solvent in the composition is first hardened so as to exert a strong adhesive force and then converted into a carbon precursor which effectively contributes to the adhesion, the carbon precursor further contributing to stably adhere and fix the molding onto the base material until the temperature reaches the sintering temperature.

The sintering is carried out under a non-oxidizing atmosphere since a desired alloy layer cannot be formed in an oxidizing atmosphere, because the molding is oxidized and suffers deterioration. The non-oxidizing atmosphere can be, e.g. a hydrogen gas atmosphere, a nitrogen gas atmosphere or a vacuum.

When the temperature of the system is thus increased to the sintering temperature and then the system is maintained at the sintering temperature for a definite period of time, the carbon precursor (residually at least about 0.5 wt.%) in the fixing composition is completely carbonized; similar materials in the metal powder molding are also carbonized and disappear. On the other hand, the metal component in the molding diffuses into the substrate to form a metal layer strongly bonded thereto.

The invention is described in more detail by reference to the following examples. All parts and percentages are by weight.

Example 1

A mixture of 75 parts of a bisphenol A type liquid epoxy resin (epoxy equivalent: 184 to 194), 25 parts of a bisphenol A type solid epoxy resin (epoxy equivalent: 600 to 700), and 60 parts of acetone was mixed, and 5 parts of dicyandiamide and 2 parts of dichlorophenyldimethylurea were further added thereto to form a solution as a fixing composition. The solution was coated on a mold release paper and dried to form a sheet having a thickness of 20 µm. The amount of residual carbon when the sheet was subjected to a carbonization treatment under the same condition as the subsequent sintering treatment was 7%.

Separately, a mixture of (a) 48.5% of an eutectic alloy powder composed of 10.5% Mo, 2.5% Cr, 2.4% P and 3.6% C, the rest being Fe and having a particle size of 150 Tyler mesh or less, (b) 48.5% of a SUS 410 chrome stainless steel having a particle size of 0.104 mm or less (150 Tyler mesh or less), and (c) 3% of a (meth)acrylic acid alkyl resin was wet kneaded using acetone as a solvent; the kneaded mixture was rolled to form an alloy powder sheet having a thickness of 2 mm and a density of 4.8 g/cm$^3$.

The sheet thus formed was cut into a size of 1 cm×1 cm and after sticking the above sheet of the fixing composition cut to the same size to the alloy powder sheet, the sheet was stuck to a vertical surface of a steel substrate. Thereafter, the temperature of the system was increased to 1,090°C at a rate of 15°/min in a hydrogen gas atmosphere and after maintaining the system at the temperature for 20 minutes, the system was gradually cooled.

Thus, an abrasion-resisting alloy layer having a thickness of 1.6 to 1.65 mm, a hardness of 62 to 65 in HRC, and a density of 7.6 to 7.75 g/cm$^3$ and strongly bonded to the steel base material was formed without the metal powder sheet falling off during the sintering treatment.

Example 2

| | Parts |
|---|---|
| Bisphenol A type liquid epoxy resin (epoxy equivalent: 184 to 194) | 80 |
| Bisphenol A type solid epoxy resin (epoxy equivalent: 600 to 700 | 20 |
| Acetone | 50 |
| Dicyandiamide | 5 |
| Dichlorophenyldimethylurea | 2 |

A fixing composition was formed by mixing the above-described components in the same manner as in Example 1 and coated on a mold release paper and dried to form a sheet having a thickness of 30 µm. The amount of residual carbon when the sheet was subjected to a carbonization treatment under the same condition as the subsequent sintering treatment was 8%.

Separately, after wet-kneading 58.8% of the eutectic alloy powder as used in Example 1, 39.2% of a SUS 410 powder having a particle size of 0.104 mm or less (150 Tyler mesh or less), and 2% of a (meth)-acrylic acid alkyl ester using toluene as a solvent, the kneaded mixture was rolled to provide an alloy powder sheet having a thickness of 1 mm and a density of 4.65 g/cm$^3$.

The sheet thus formed was cut into a size of 1 cm×1 cm and after sticking the above sheet of the fixing compositimn cut into the same size to the alloy powder sheet, the sheet was stuck to a vertical surface of a metal base material. Thereafter, the temperature of the system was increased to 1,080°C at a rate of 20°C/min in a hydrogen gas atmosphere, and after maintaining the system at the temperature for 15 minutes, the system was gradually cooled.

Thus, an abrasion-resisting alloy layer having a thickness of 0.8 to 0.82 mm, a hardness of 61 to 63 in HRC, and a density of 7.6 to 7.7 g/cm$^3$ and strongly bonded to the steel base material was formed without causing falling of the alloy powder metal during the sintering treatment.

Example 3

A fixing composition was prepared by mixing 100 parts of an unsaturated polyester resin (a mixture of 70% unsaturated polyester resin having an acid value of 19 to 25 and 30% of styrene) and 1 part of dibenzoyl peroxide and was coated on a mold release paper to provide a sheet having a thickness of 20 µm. The amount of residual carbon when the sheet was subjected to a carbonization treatment under the same condition as the sintering treatment explained after was 7%.

After wet-kneading 38.6% of the same eutectic alloy powder as used in Example 1, 57.9% of a SUS 410 powder having a particle size of 0.104 mm or less (150 Tyler mesh or less), and 3.5% of a (meth)acrylic acid alkyl ester resin, using toluene as a solvent, the kneaded mixture was rolled to form an alloy powder sheet having a thickness of 1.5 mm and a density of 4.8 g/cm³.

The sheet was cut into a size of 1 cm×1 cm and after sticking the sheet of the above fixing composition cut into the same size to the alloy powder sheet, the sheet was stuck to a vertical surface of a steel base material. Thereafter, the temperature of the system was increased to 1,100°C at a rate of 10°C/min in a hydrogen gas atmosphere and after maintaining the system at the temperature for 20 minutes, the system was gradually cooled.

Thus, an abrasion-resisting alloy layer having a thickness of 1.3 to 1.35 mm, a hardness of 60 to 62 in HRC and a density of 7.5 to 7.7 g/cm³ was formed without causing falling of the alloy powder sheet during the sintering treatment.

## Claims

1. A method of sintering a metal alloy to a metal substrate, wherein the alloy is in the form of a molding or sheet formed from a mixture of the alloy and a synthetic resin binder, which comprises placing said sheet or molding on said substrate, interposing between said sheet and substrate a fixing composition containing as its principal component a thermo-setting resin, heating the resultant assembly in a non-oxidizing atmosphere so as to form from the composition an adhesive, continuing the heating at a constant rate of temperature increase up to the temperature at which the metal alloy is sintered to the substrate and at which the adhesive formed disappears, and the amount of residual carbon of the resin after completion of the sintering being at least 0.5% by weight.

2. A method as claimed in Claim 1, wherein the thermo-setting resin used is an epoxy resin.

3. A method as claimed in Claim 2, wherein the epoxy resin is a bisphenol A type epoxy resin having an epoxy equivalent of 100 to 5,000.

4. A method as claimed in Claim 1 or 2, wherein the thermo-setting resin composition further contains a hardening agent for the thermo-setting resin.

5. A method as claimed in any preceding claim, wherein the amount of said residual carbon in said resin is from 1.0 to 10% by weight.

6. A method as claimed in any preceding claim, wherein the composition is in the form of a sheet or layer 5 to 50 μm thick.

7. A method as claimed in any preceding claim, wherein the composition includes an organic solvent.

8. A method as claimed in any preceding claim, wherein said thermo-setting resin containing composition is used in the form of a molded layer thereof.

9. A method as claimed in any preceding claim, wherein said alloy is a multi-component eutectic alloy powder containing iron, carbon and at least one of Mo, B and P.

10. A method as claimed in any preceding claim, wherein the heating at a constant rate of temperature increase is up to 1,000 to 1,150°C.

## Patentansprüche

1. Verfahren zum Sintern einer Metallegierung an ein Metallsubstrat, wobei die Legierung in Form eines aus einer Mischung aus der Legierung und einem synthetischen Harzbindemittel gebildeten Formlings oder Platte vorliegt, umfassend das Anordnen der Platte oder des Formlings auf dem Substrat, das Einfügen zwischen der Platte und dem Substrat einer Fixiermasse, die als Hauptkomponente ein wärmehärtendes Harz enthält, Erhitzen der resultierenden Anordnung in einer nicht oxidierenden Atmosphäre, um aus der Masse einen Klebstoff zu bilden, Weiterführen des Erhitzens mit konstanter Temperaturerhöhungsrate bis zu der Temperatur, bei der die Metallegierung an dem Substrat sintert und bei der der gebildete Klebstoff sich verflüchtigt und die Menge an Restkohlenstoff aus dem Harz nach Vervollständigung des Sinterns wenigstens 0,5 Gew.-% beträgt.

2. Verfahren nach Anspruch 1, wobei das verwendete wärmehärtende Harz ein Epoxyharz ist.

3. Verfahren nach Anspruch 2, wobei das Epoxyharz ein Epoxyharz vom Bisphenol A-Typ mit einem Epoxyäquivalent von 100 bis 5000 ist.

4. Verfahren nach Anspruch 1 oder 2, wobei die wärmehärtende Harzmasse weiterhin ein Härtungsmittel für das wärmehärtende Harz enthält.

5. Verfahren nach wenigstens einem der vorangehenden Ansprüche, wobei die Menge des Restkohlenstoffs in dem Harz 1,0 bis 10 Gew.-% beträgt.

6. Verfahren nach mindestens einem der vorangehenden Ansprüche, wobei die Masse in Form einer Platte oder Schicht mit 5 bis 50 μm Dicke vorliegt.

7. Verfahren nach mindestens einem der vorangehenden Ansprüche, wobei die Masse ein organisches Lösungsmittel beinhaltet.

8. Verfahren nach mindestens einem der vorangehenden Ansprüche, wobei die das wärmehärtende Harz enthaltende Masse in Form einer geformten Schicht hiervon verwendet wird.

9. Verfahren nach mindestens einem der vorangehenden Ansprüche, wobei die Legierung ein mehrkomponentiges eutektisches Legierungspulver ist, enthaltend Eisen, Kohlenstoff und mindestens eines aus Mo, B und P.

10. Verfahren nach mindestens einem der vorangehenden Ansprüche, wobei das Erhitzen mit konstanter Temperaturerhöhungsrate auf 1000 bis 1150°C erfolgt.

## Revendications

1. Un procédé de frittage d'un alliage métallique sur un support métallique, dans lequel l'alliage est sous la forme d'un moulage ou d'une feuille formé à partir d'un mélange de l'alliage et d'un liant de résine synthétique, qui consiste à placer ladite feuille ou moulage sur ledit support, à intercaler entre ladite feuille et ledit support une composition de fixation contenant comme composant principal une résine thermodurcissable, à chauffer l'ensemble résultant dans une atmosphère non oxydante de manière à former un adhésif à partir de la composition, à continuer le chauffage à une vitesse constante d'élévation de la température jusqu'à la température à laquelle l'alliage métallique est fritté sur le support et à laquelle l'adhésif formé disparaît et la quantité de carbone résiduel de la résine après la fin du frittage étant d'au moins 0,5%.

2. Un procédé selon la revendication 1, dans lequel la résine thermodurcissable utilisée est une résine époxydique.

3. Un procédé selon la revendication 2, dans lequel la résine époxydique est une résine époxydique du type bisphénol A ayant un équivalent d'époxyde de 100 à 5 000.

4. Un procédé selon la revendication 1 ou 2, dans lequel la composition de résine thermodurcissable contient en outre un agent durcissant pour la résine thermodurcissable.

5. Un procédé selon une quelconque des revendications précédentes, dans lequel la quantité dudit carbone résiduel dans ladite résine est de 1,0 à 10% en poids.

6. Un procédé selon une quelconque des revendications précédentes, dans lequel la composition est sous la forme d'une feuille ou d'une couche de 5 à 50 μm d'épaisseur.

7. Un procédé selon une quelconque des revendications précédentes, dans lequel la composition contient un solvant organique.

8. Un procédé selon une quelconque des revendications précédentes, dans lequel ladite composition contenant une résine thermodurcissable est utilisée sous la forme d'une couche moulée.

9. Un procédé selon une quelconque des revendications précédentes, dans lequel ledit alliage est une poudre d'alliage eutectique à plusieurs composants contenant du fer, du carbone et au moins l'un des éléments Mo, B, et P.

10. Un procédé selon une quelconque des revendications précédentes, dans lequel le chauffage à une vitesse constante d'élévation de la température s'effectue jusqu'à 1 000 à 1 150°C.